# EUROPEAN PATENT SPECIFICATION

(11) **EP 3 818 835 B1**
(45) Date of publication and mention of the grant of the patent: **25.09.2024**
(21) Application number: 18925155.6
(22) Date of filing: 03.07.2018
(51) Int. Cl.: A23K 20/189, A23K 20/24, A23K 20/26, A23K 50/10, A23K 50/75

(54) **ADDITIVE FOR ANIMAL FODDER AND USE OF SAME**
ADDITIV FÜR TIERFUTTER UND DESSEN VERWENDUNG
ADDITIF POUR ALIMENT DE BÉTAIL ET SON UTILISATION

(43) Date of publication of application: 12.05.2021
(73) Proprietor: Fertinagro Biotech, S.L., 44195 Teruel (ES)
(72) Inventor: ATARES REAL, Sergio, 44195 TERUEL (ES); ROMERO LOPEZ, Joaquin, 44195 TERUEL (ES); SALAET MADORRAN, Ignasi, 44195 TERUEL (ES); FERRER GINES, María, 44195 TERUEL (ES); NARANJO OLIVERO, Miguel Angel, 44195 TERUEL (ES); YANCE CHAVEZ, Tula Del Carmen, 44195 TERUEL (ES); ALIGUE ALEMAY, Rosa, 44195 TERUEL (ES)
(74) Representative: González López-Menchero, Álvaro Luis
(86) International application number: PCT/ES2018/070475
(87) International publication number: WO 2020/008081

(56) References cited:
- WO-A1-00/47060
- WO-A1-03/057247
- WO-A1-2014/159185
- WO-A1-2014/159185
- WO-A1-93/16175
- CN-A- 102 239 966
- CN-A- 102 239 966
- US-A1- 2014 037 582
- LI DEFA ET AL: "Effect of microbial phytase, vitamin D3, and citric acid on growth performance and phosphorus, nitrogen and calcium digestibility in growing swine", ANIMAL FEED SCIENCE AND TECHNOLOGY, vol. 73, no. 1-2, 1 July 1998 (1998-07-01), AMSTERDAM, NL, pages 173 - 186, XP055869245, ISSN: 0377-8401, DOI: 10.1016/S0377-8401(98)00124-2
- LEI X. G. ET AL: "Calcium level affects the efficacy of supplemental microbial phytase in corn-soybean meal diets of weanling pigs1", JOURNAL OF ANIMAL SCIENCE, vol. 72, no. 1, 1 January 1994 (1994-01-01), US, pages 139 - 143, XP055869235, ISSN: 0021-8812, Retrieved from the Internet <URL:http://dx.doi.org/10.2527/1994.721139x> [retrieved on 20211203], DOI: 10.2527/1994.721139x
- KORNEGAY E. T. ET AL: "Replacement of inorganic phosphorus by microbial phytase for young pigs fed on a maiz-soyabean-meal diet", BRITISH JOURNAL OF NUTRITION, vol. 76, no. 4, 1 October 1996 (1996-10-01), pages 563 - 578, XP055869238, ISSN: 0007-1145, DOI: 10.1079/BJN19960063
- WANG TAO ET AL: "Enzymatic Properties of Phytase from Escherichia coli DH5[alpha] :", PROCEEDINGS OF THE INTERNATIONAL CONFERENCE ON CHEMICAL,MATERIAL AND FOOD ENGINEERING, vol. 22, 1 January 2015 (2015-01-01), Paris, France, XP055869230, ISBN: 978-94-625-2093-6, DOI: 10.2991/cmfe-15.2015.22

## Description

The present invention relates to a food additive for fodder intended for animal nutrition, as well as the use of same.

More specifically, the invention provides an additive for fodder for animal nutrition, for example feedlot cattle or poultry, which includes a phytase enzyme and a calcium phosphate source in a single additive.

Feed for feedlot animals and poultry, generally known as compound fodder, is fodder that is mixed from various raw materials and additives. Compound fodder can be prepared as whole feed, which provides all nutrients that are required daily, as concentrates, which provide a part of the ration (protein, energy), or as supplements, which provide additional micronutrients, for example minerals and vitamins.

A main ingredient used in commercial preparations is cereal grains or legumes, for example corn, soybean, sorghum, oats, barley and mixtures thereof.

In the animal feed industry, the sale and manufacture of premixes is also relevant. Premixes can be composed of micro-ingredients that are mixed into commercial rations or produced individually to obtain animal feed. Micro-ingredients may include nutrients, vitamins, minerals, chemical preservatives, antibiotics, fermentation products, enzymes and other essential ingredients.

Thus, fodder mixtures are normally formulated according to the specific requirements of the target animal. Feed manufacturers prepare the mixtures by purchasing the products, in other words, the main ingredients, for example cereals such as corn, soybean, sorghum, oats and barley, and the desired micro-ingredients and mixing or combining them in a fodder mill according to specifications provided by a nutritionist. These mixtures can be obtained in the form of flours, pellets or pastes.

Usually, a phosphorus and calcium source, such as monocalcium phosphate with a phosphorus content of more than 22 % or dicalcium phosphate with a phosphorus content of 18 %, is added to the fodder.

Although micro-ingredients provide a highly bioavailable source of inorganic phosphorus, organic phosphorus is also present in animal feed in plant tissue which is the main ingredient. Nevertheless, this organic phosphorus is present as phytic acid, inositol hexaphosphate (phytate), which cannot be digested by non-ruminant animals.

Among the mineral macronutrients present in fodder, one of the most important is phosphorus. Although it is usually present in high amounts in diets, it is not properly assimilated in most cases. Of the total amount of this mineral that is consumed, only 33 % is retained, while the remaining 67 % is discarded in faeces (Helander et al., Effects of supplementary Aspergillus niger phytase on the availability of plant phosphorus, other minerals and nutrients in growing pigs fed on high-pea diets, Journal Animal Physiology and Nutrition, 76: 66-79, 1996).

The problem in the assimilation of phosphorus and other essential substances is due to the presence of anti-nutritional factors in feed, which act by binding to nutrients, causing a decrease in the availability thereof (Adeola et al., Phytase-induced changes in mineral utilization in zinc supplemented diets for pigs, Journal Animal Science, 73: 3384-339, 1995; Huyghebaert, G., The response of broiler chicks to phase feeding for P, Ca and phytase, Archiv fur Gefluegelkunde, 60: 132-14, 1996).

Among the anti-nutritional factors related to phosphorus metabolism is phytic acid, abundant in cereals and legumes, the presence of which can vary from 2 % in cereals such as soybean to 4% in corn and wheat (Frontela et al., Empleo de fitasas como ingrediente funcional en alimentos [Use of phytases as a functional ingredient in food], Archives Latinoamericanos de Nutrición, 58(3): 215-220, 2008).

Phytic acid is a carboxylic acid with a pKa less than 3.5, which has six strongly coupled protons with a pKa of between 4.6 and 10 in its structure, which gives the structure a strong chelation potential on essential minerals such as calcium, as well as the ability to bind to proteins, amino acids and sugars and inhibit some digestive enzymes, as trypsin and chymotrypsin, alpha-amylases, tyrosinases and pepsins. By establishing ionic bonds between phytic acid and nutrients, insoluble chelates called phytates, which are a large group of highly complex compounds that cannot be assimilated by non-ruminant organisms, are formed (Romero et al., Efecto de una fitasa en la digestibilidad y actividad de la tripsina y quimiotripsina en cerdos destetados [Effect of a phytase on digestibility and activity of trypsin and chymotrypsin in weanling pigs], Archives de Zootecnia, 58(223): 363-369, 2008). Accordingly, everything that is bound to this compound will not be fully used. Moreover, since organic phosphorus is therefore not available to the animal, it is excreted into the surrounding environment, which constitutes a potential danger for the immediate surroundings when it is released into the environment in large quantities.

To avoid this problem, the technique of adding a phytase enzyme to fodder as a separate ingredient is known.

Phytases are part of a subgroup of enzymes of the family of acid phosphatases, which are of the hydrolase type. They act by breaking phosphomonoester bonds, degrading phytates to myo-inositol hexaphosphate and inorganic phosphorus, which have less or no chelating effect (Kim et al., 2006). In this manner, organic phosphorus becomes an additional phosphorus source. Phytase activity is measured by FTU units, one FTU unit being the amount of enzyme necessary to release 1 µmol of inorganic orthophosphate per minute in a solution containing 0.0051 mol/l of sodium phytate at pH 5.5 and at a temperature of 37 °C.

For example, EP1465655 describes a thermotolerant phytase and the use thereof in a feed product for cattle.

Likewise, phosphates are important sources of Ca, the content of which is inverse to the content in P; mineral supplementation, in particular calcium, is made in the form of bone meal, which is currently highly questioned, tricalcium, dicalcium and monocalcium phosphates.

Nevertheless, the drawback arises when it comes to mixing some phytases with the different calcium phosphate sources, in particular monocalcium phosphate, dicalcium phosphate or a mixture of both.

Thus, it has been described that Ca²⁺ has an inhibitory effect on phytase activity at concentrations above 1.5 mM (R. P. Igamnazarov et al., Effect of metal ions on the activity of extracellular phytase of Bacterium sp, Chem Nat Compd (1999) 35: 661, https://doi.org/10.1007/BF02236298). Likewise, Alberto A. Neira-Vielma et al., in Biotechnology Reports (2018), volume 17, pages 49 - 54, indicates that in a study of the possible industrial application of a phytase, phytase activity was inhibited by 50 % by the presence of a calcium ion at concentrations of 10 and 20 mM.

Lei, X.G. et al. (Calcium level affects the efficacy of supplemental microbial phytase in corn-soybean meal diets of weanling pigs, J. Anim. Sci., 72, 139-143, 1994) also indicates that the response to a given level of exogenous phytase can be affected by the amount of calcium and/or the Ca/P ratio, the level of P and the level of phytate in the diet. Thus, a high Ca/phytate molar ratio present in the diet can lead to the formation of highly insoluble Ca-phytate complexes in the intestinal tract. It is also believed that an excess of Ca may reduce enzyme activity by competing with phytases for their preferred site of action (Kornegay, E.T. and Qian, H. (1996) Replacement of inorganic phosphorus by microbial phytase for young pigs fed on a maize-soybean-meal diet. Br. J. Nutr., 76, 563-578, 1999). In pig studies, a greater response to phytases, better use of P, is obtained when the total Ca/total P ratio is kept between 1:1 and 1.1:1; higher levels of Ca reduce P uptake and phytate utilisation (Jongbloed et al., (1996) in Coelho. M. B. and Kornegay, E. T. (ed), Phytase in Animal Nutrition and Waste Management: 393-400. BASF Corp., NJ). It has also been noted that an increase in the level of vitamin D in the diet (6600 IU/kg) partially reduces the negative effect that a normal level of Ca has on phytase activity, but it does not lead to an improvement when the Ca level is low (Lei et al., supra). Nevertheless, no increase in P utilisation is observed upon adding 2,000 IU of vitamin D/kg to a diet with or without phytases (Li et al. (1998), Effect of microbial phytase, vitamin D3, and citric acid on growth performance and phosphorus, nitrogen and calcium digestibility in growing swine. Anim. Feed Sci. Technol., 73, 173-186).

The sensitivity of phytases to the presence of soluble phosphorus in the form of phosphate has also been described in the literature (Tao Wang et al. (2015), International Conference on Chemical, Material and Food Engineering (CMFE-2015). Enzymatic Properties of Phytase from Escherichia coli DFI5α4,5; Kim, Dong-Flyun et al. (1999), Biotechnology Letters, 925-927, Enzymatic evaluation of Bacillus amyloliquefaciens phytase as a feed additive).

Therefore, calcium sources in the form of calcium phosphates and phytases as independent additives are usually incorporated into the fodder, since, as previously mentioned, direct mixing of these two additives is not feasible due to the fact that phosphates inhibit phytase activity.

For example, EP2368440B1 describes an additive for fodder that can include a phytase and macrominerals such as calcium or phosphorous that are added to the fodder separately. WO 2014/159185 A1 discloses a liquid enzyme formulation comprising: (a) a phytase; (b) a buffer, wherein the buffer is selected from the group consisting of: sodium citrate, potassium citrate, citric acid, sodium acetate, acetic acid, sodium phosphate, potassium phosphate, and any combination thereof; (c) a stabiliser selected from the group consisting of: sucrose, sorbitol, mannitol, glycerol, trehalose, sodium chloride, sodium sulphate, or any combination thereof; and, (d) an anti-microbial. CN 102 239 966 discloses a pig feed that allows the utilisation rate of calcium and phosphorous therein to be improved, the discharge of calcium and phosphorous to be decreased, the environmental pollution to be reduced, the feed/grain ratio of pig feeding to be reduced, and the enterprise operating costs to be decreased. The composite feed comprises, by weight, 65.5-76.4 parts of corn, 3-5.2 parts of wheat bran, 13.5-24 parts of soybean meal, 1-4 parts of a premix, 0.3-0.5 parts of salt, 0.5-1.5 parts of stone flour, 0.01-0.158 parts of calcium hydrogen phosphate, 0.008-0.015 parts of phytase, and 0.5-1.5 parts of citric acid.A

The present invention solves the drawbacks of the additives currently known in the state of the art, providing an additive that includes both a phosphorus source and a phytase, in particular an additive that includes monocalcium and dicalcium phosphates containing a phytase enzyme, without the phytase losing its activity.

To that end, in general, the invention is based on the inclusion of the phytase enzyme in an organic fibre matrix to which a natural calcium chelating agent is incorporated.

As mentioned, the invention provides a food additive for fodder which includes a phytase enzyme and a calcium phosphate source in a single additive.

Thus, in one embodiment, the additive of the invention comprises:
- A liquid mixture of a polyol together with
   i) a phytase in an amount suited to provide a final phytase activity of between 10,000 and 100,000 FTU/ml, FTU being the amount of enzyme necessary to release 1 µmol of inorganic orthophosphate per minute in a solution containing 0.0051 mol/l of sodium phytate at pH 5.5 and at a temperature of 37 °C;
   ii) ground vegetable fibre with a maximum particle diameter of 250 µm,
   iii) citric acid in a concentration between 1 - 5 % by weight with respect to the total weight of the liquid mixture as a chelating agent, stabilising the pH at pH 5 and
- A phosphorus source selected among monocalcium phosphate, monodicalcium phosphate or a combination of both in the form of defluorinated or granulated mud.

Preferably, the polyol included as a liquid phase in the additive of the invention is selected from glycols such as ethylene glycol, propylene glycol, butylene glycol, polyethylene glycol, polypropylene glycol, polybutylene glycol or combinations thereof.

Preferably, the amount of polyol present in the additive is selected from between 2 and 80 % by weight with respect to the total weight of the liquid mixture, adapting the amount of polyol to the amount of ground vegetable fibre.

Preferably, the amount of ground vegetable fibre present in the additive of the invention ranges between 3-5 % by weight with respect to the total weight of the liquid mixture.

In another embodiment, the additive of the invention comprises:
- A solid mixture of
   i) a phytase in an amount suited to provide a final phytase activity of between 10,000 and 100,000 FTU/g, FTU being the amount of enzyme necessary to release 1 µmol of inorganic orthophosphate per minute in a solution containing 0.0051 mol/l of sodium phytate at pH 5.5 and at a temperature of 37 °C;
   ii) ground vegetable fibre with a maximum particle diameter of 250 µm,
   iii) citric acid in a concentration between 5 % - 35 % by weight with respect to the total weight of the solid mixture as a chelating agent, and
- A phosphorus source selected among monocalcium phosphate, monodicalcium phosphate or a combination of both in the form of a defluorinated powder.

In this second embodiment, the amount of ground vegetable fibre present in the additive of the invention ranges between 2 and 25 % with respect to the total weight of the solid mixture.

In both embodiments, any suitable vegetable fibre containing phytate, for example barley, corn, wheat, wheat bran, rice bran or soybean flour, can be used as vegetable fibre for the described additive. Preferably, cereal bran is used, for example wheat or rice bran.

For the described embodiments, the amount of the liquid or solid mixture to be applied to the phosphate source is selected so that the additive of the invention contains between 100 and 5,000 FTU per gram.

Although the phytase used in the invention is not particularly limited, it should maintain its activity in the pH range of the animal's gastrointestinal tract. Therefore, in one embodiment of the invention a thermostable phytase with high specific activity, of at least 1120 ± 150 U/mg, derived from *Serratia odorifera*, is used, for example that described in patent application WO 2011/141613. Selection of this particular phytase ensures that its activity is maintained within a broad pH range from about 3.5 in the stomach to about 7 in the intestine.

Another object of the invention is the use of the additive described above in conventional animal fodder, said additive according to the invention being incorporated in a proportion of between 100 g and 10 kg for each ton of fodder. The use of the additive of the invention makes it possible to recover 95 % of the phytase activity in the final fodder.

In this regard, the additive of the invention is easy to apply in the formulation of the fodder, applied, for example, by direct mixing with the other components of the food ration directly or as part of a premix, or to be mixed directly with fodder already formulated in the form of flour and which must be corrected in terms of its nutritional characteristics.

The additive of the invention is also suited to be applied in feed mixtures (for example corn, wheat, barley, soybean, pea, among others) that will later be ground to make fodder in the form of flour, ground and pelletised to make fodder in pellet form, or ground and moistened to form slurry.

Likewise, the additive of the invention is also suited to be applied at a time after grinding and prior to pelletisation or, when appropriate, to the generation of the slurry.

### Examples

The invention is illustrated below on the basis of exemplary embodiments thereof. These examples are illustrative of the invention and should not be understood as limiting it.

### Example 1:

A solution A is prepared containing 71,325±1,227 FTU/ml provided by the phytase of *Serratia odorifera* described in WO 2011/141613, 2 % by weight of ground wheat bran and 2.5 % by weight of citric acid, as well as 30 % by weight of polyethylene glycol.

For the purpose of comparison, a control solution (B) is prepared which only contains said phytase in a similar proportion (70,326±1,319 FTU/ml).

Both solutions are added to three sources of granulated phosphate in concentrations of 0.5, 1 and 1.5 %: 1. monocalcium phosphate (with an average particle size of 2.5±1 mm), 2. dicalcium phosphate (with an average particle size of 2.5±1 mm) and 3. monocalcium phosphate (with an average particle size of 1.0±0.2 mm).

Finally, the real activity of each combination is measured, obtaining the results shown in the following table 1:

**Table 1**

| | Solution A (%) | | | Solution B (%) | | |
|---|---|---|---|---|---|---|
| | 0.5 | 1.0 | 1.50 | 0.5 | 1.0 | 1.50 |
| 1 | 337±12 | 729±18 | 1011±39 | 0 | 8±7 | 5±7 |
| 2 | 328±14 | 687±17 | 987±57 | 3±3 | 21 ±7 | 17±16 |
| 3 | 331±10 | 674±25 | 956±62 | 0 | 19±7 | 26±10 |

As can be seen from the results obtained, the additive of the invention which includes phytase, ground wheat bran, citric acid and polyethylene glycol, as well as a phosphorus source, retains phytase activity to a much greater extent than phytase alone.

### Example 2:

A solution A is prepared containing 42,524±2,587 FTU/ml provided by the phytase of *Escherichia coli,* 2 % by weight of ground wheat bran and 2.5 % by weight of citric acid, as well as 30 % by weight of polyethylene glycol.

For the purpose of comparison, a control solution (B) is prepared which only contains said phytase in a similar proportion (45,364±1,725 FTU/ml).

Both solutions are added to three sources of granulated phosphate in concentrations of 1, 1.5 and 2 %: 1. monocalcium phosphate (with an average particle size of 2.5±1 mm), 2. dicalcium phosphate (with an average particle size of 2.5±1 mm) and 3. monocalcium phosphate (with an average particle size of 1.0±0.2 mm).

Finally, the real activity of each combination is measured, obtaining the results shown in the following table 2:

**Table 2**

| | Solution A (%) | | | Solution B (%) | | |
|---|---|---|---|---|---|---|
| | 1 | 1.5 | 2 | 1 | 1.5 | 2 |
| 1 | 397±21 | 658±12 | 801±45 | 84±28 | 110±28 | 185±21 |
| 2 | 412±16 | 684±35 | 824±23 | 71±29 | 123±37 | 130±58 |
| 3 | 376±32 | 625±27 | 792±39 | 32±10 | 89±38 | 197±19 |

### Example 3:

A solution A is prepared containing 10,420±351 FTU/ml provided by a phytase of *Serratia odorifera,* 2 % by weight of ground wheat bran and 5.0 % by weight of citric acid.

For the purpose of comparison, a control solution B is prepared which only contains said phytase in the same proportion. Solutions A and B are dried by spray-drying methods.

The activity of dry products is quantified:
Drying of A (SA): 53,785±2,168 FTU/gram
Drying of B (SB): 67,524±3,128 FTU/gram

Both dry products are added to two sources of powder phosphate in concentrations of 2, 5 and 10 %: 1. monocalcium phosphate and 2. dicalcium phosphate

Finally, the real activity of each product is measured, obtaining the results shown in the following table 3:

**Table 3**

| | Drying A (%) | | | Drying B (%) | | |
|---|---|---|---|---|---|---|
| | 2.0 | 5.0 | 10.0 | 2.0 | 5.0 | 10.0 |
| 1 | 1002±87 | 2541±181 | 5039±197 | 457±52 | 938±93 | 2368±168 |
| 2 | 1068±54 | 2631±163 | 5127±101 | 596±61 | 973±187 | 2589±189 |

As can be seen from the results obtained, the additive of the invention which includes phytase, ground wheat bran and citric acid, and, if appropriate, a polyol, as well as a phosphorus source, retains phytase activity to a much greater extent than in the case of phytase alone.

## Claims

1. A food additive for fodder for animal nutrition, the additive comprising a liquid mixture of a polyol together with
i) a phytase in an amount suited to provide a final phytase activity of between 10,000 and 100,000 FTU/ml, FTU being the amount of enzyme necessary to release 1 µmol of inorganic orthophosphate per minute in a solution containing 0.0051 mol/l of sodium phytate at pH 5.5 and at a temperature of 37 °C;
ii) ground vegetable fibre with a maximum particle diameter of 250 µm,
iii) citric acid in a concentration between 1-5 % by weight with respect to the total weight of the liquid mixture as chelating agent, stabilising the pH at pH 5 and
a phosphorus source selected among monocalcium phosphate, monodicalcium phosphate or a combination of both in the form of defluorinated or granulated mud.

2. The food additive for fodder according to claim 1, **characterised in that** the polyol is a glycol.

3. The food additive for fodder according to claim 2, **characterised in that** the glycol is selected from ethylene glycol, propylene glycol, butylene glycol, polyethylene glycol, polypropylene glycol, polybutylene glycol or combinations thereof.

4. The food additive for fodder according to any of the preceding claims, **characterised in that** the amount of polyol present in the additive is selected from between 2 and 80 % by weight with respect to the total weight of the liquid mixture.

5. A food additive for fodder for animal nutrition, the additive comprising a solid mixture of
i) a phytase in an amount suited to provide a final phytase activity of between 10,000 and 100,000 FTU/g, FTU being the amount of enzyme necessary to release 1 µmol of inorganic orthophosphate per minute in a solution containing 0.0051 mol/l of sodium phytate at pH 5.5 and at a temperature of 37 °C;
ii) ground vegetable fibre with a maximum particle diameter of 250 µm,
iii) citric acid in a concentration between 5 % - 35 % by weight with respect to the total weight of the solid mixture as a chelating agent, and
a phosphorus source selected among monocalcium phosphate, monodicalcium phosphate or a combination of both in the form of a defluorinated powder.

6. The food additive for fodder according to claim 1, **characterised in that** the amount of ground vegetable fibre present in the additive ranges between 3-5 % by weight with respect to the total weight of the liquid mixture.

7. The food additive for fodder according to claim 5, **characterised in that** the amount of ground vegetable fibre present in the additive of the invention ranges between 2 and 25 % with respect to the total weight of the solid mixture.

8. The food additive for fodder according to claims 1 or 5, **characterised in that** vegetable fibre from barley, corn, wheat or soybean, wheat bran or rice bran is used as vegetable fibre.

9. The food additive for fodder according to claim 8, **characterised in that** the vegetable fibre is wheat or rice bran.

10. Use of the additive according to any of the preceding claims for the production of an animal fodder, wherein the additive is applied to the fodder in a proportion of between 100 g and 10 kg for each ton of fodder.

## Patentansprüche

1. Lebensmittelzusatzstoff für Futtermittel zur Tierernährung, wobei der Zusatzstoff eine flüssige Mischung eines Polyols zusammen mit Folgendem umfasst:
i) einer Phytase in einer Menge, die geeignet ist, eine endgültige Phytaseaktivität zwischen 10.000 und 100.000 FTU/ml bereitzustellen, wobei FTU die Enzymmenge ist, die erforderlich ist, um 1 µmol anorganisches Orthophosphat pro Minute in einer Lösung, die 0,0051 mol/l Natriumphytat enthält, bei einem pH-Wert von 5,5 und einer Temperatur von 37 °C freizusetzen;
ii) gemahlenen Pflanzenfasern mit einem maximalen Partikeldurchmesser von 250 µm,
iii) Zitronensäure in einer Konzentration zwischen 1 und 5 Gew.-%, bezogen auf das Gesamtgewicht der flüssigen Mischung, als Chelatbildner, der den pH-Wert bei pH 5 stabilisiert, und
einer Phosphorquelle, ausgewählt aus Monocalciumphosphat, Dicalciumphosphat oder einer Kombination von beiden in Form von defluoriertem oder granuliertem Schlamm.

2. Lebensmittelzusatzstoff für Futtermittel gemäß Anspruch 1, **dadurch gekennzeichnet, dass** das Polyol ein Glykol ist.

3. Lebensmittelzusatzstoff für Futtermittel gemäß Anspruch 2, **dadurch gekennzeichnet, dass** das Glykol aus Ethylenglykol, Propylenglykol, Butylenglykol, Polyethylenglykol, Polypropylenglykol, Polybutylenglykol oder Kombinationen davon ausgewählt ist.

4. Lebensmittelzusatzstoff für Futtermittel gemäß einem der vorhergehenden Ansprüche, **dadurch gekennzeichnet, dass** die in dem Zusatzstoff vorhandene Polyolmenge aus einem Wert zwischen 2 und 80 Gew.-%, bezogen auf das Gesamtgewicht der flüssigen Mischung, ausgewählt ist.

5. Lebensmittelzusatzstoff für Futtermittel zur Tierernährung, wobei der Zusatzstoff eine feste Mischung von Folgendem umfasst:
i) einer Phytase in einer Menge, die geeignet ist, eine endgültige Phytaseaktivität zwischen 10.000 und 100.000 FTU/g bereitzustellen, wobei FTU die Enzymmenge ist, die erforderlich ist, um 1 µmol anorganisches Orthophosphat pro Minute in einer Lösung, die 0,0051 mol/l Natriumphytat enthält, bei einem pH-Wert von 5,5 und einer Temperatur von 37 °C freizusetzen;
ii) gemahlenen Pflanzenfasern mit einem maximalen Partikeldurchmesser von 250 µm,
iii) Zitronensäure in einer Konzentration zwischen 5 und 35 Gew-%, bezogen auf das Gesamtgewicht der festen Mischung, als Chelatbildner und
einer Phosphorquelle, ausgewählt aus Monocalciumphosphat, Dicalciumphosphat oder einer Kombination von beiden in Form eines defluorierten Pulvers.

6. Lebensmittelzusatzstoff für Futtermittel gemäß Anspruch 1, **dadurch gekennzeichnet, dass** die in dem Zusatzstoff vorhandene Menge an gemahlenen Pflanzenfasern im Bereich zwischen 3 und 5 Gew.-%, bezogen auf das Gesamtgewicht der flüssigen Mischung, liegt.

7. Lebensmittelzusatzstoff für Futtermittel gemäß Anspruch 5, **dadurch gekennzeichnet, dass** die Menge der in dem erfindungsgemäßen Zusatzstoff vorhandenen gemahlenen Pflanzenfasern zwischen 2 und 25 %, bezogen auf das Gesamtgewicht der festen Mischung, liegt.

8. Lebensmittelzusatzstoff für Futtermittel gemäß den Ansprüchen 1 oder 5, **dadurch gekennzeichnet, dass** als Pflanzenfaser eine Pflanzenfaser aus Gerste, Mais, Weizen oder Soja, Weizenkleie oder Reiskleie verwendet wird.

9. Lebensmittelzusatzstoff für Futtermittel gemäß Anspruch 8, **dadurch gekennzeichnet, dass** der Pflanzenfaserstoff Weizen- oder Reiskleie ist.

10. Verwendung des Zusatzstoffs gemäß einem der vorhergehenden Ansprüche zur Herstellung eines Tierfuttermittels, wobei der Zusatzstoff dem Futter in einem Anteil zwischen 100 g und 10 kg pro Tonne Futtermittel zugesetzt wird.

## Revendications

1. Additif alimentaire pour fourrage pour la nutrition animale, l'additif comprenant un mélange liquide d'un polyol conjointement avec
i) une phytase en une quantité convenant pour fournir une activité phytase finale comprise entre 10 000 et 100 000 FTU/ml, FTU étant la quantité d'enzyme nécessaire pour libérer 1 µmol d'orthophosphate inorganique par minute dans une solution contenant 0,0051 mol/l de phytate de sodium à pH 5,5 et à une température de 37 °C ;
ii) des fibres végétales broyées présentant un diamètre maximal des particules de 250 µm,
iii) de l'acide citrique en une concentration comprise entre 1 et 5 % en poids par rapport au poids total du mélange liquide en tant qu'agent chélatant, stabilisant le pH à pH 5 et
une source de phosphore choisie parmi le phosphate monocalcique, le phosphate dicalcique ou une combinaison des deux sous la forme de bouillie défluorée ou granulée.

2. Additif alimentaire pour fourrage selon la revendication 1, **caractérisé en ce que** le polyol est un glycol.

3. Additif alimentaire pour fourrage selon la revendication 2, **caractérisé en ce que** le glycol est choisi parmi l'éthylèneglycol, le propylèneglycol, le butylèneglycol, le polyéthylèneglycol, le polypropylèneglycol, le polybutylèneglycol ou des combinaisons de ceux-ci.

4. Additif alimentaire pour fourrage selon l'une quelconque des revendications précédentes, **caractérisé en ce que** la quantité de polyol présent dans l'additif est choisie entre 2 et 80 % en poids par rapport au poids total du mélange liquide.

5. Additif alimentaire pour fourrage pour la nutrition animale, l'additif comprenant un mélange solide de
i) une phytase en une quantité convenant pour fournir une activité phytase finale comprise entre 10 000 et 100 000 FTU/g, FTU étant la quantité d'enzyme nécessaire pour libérer 1 µmol d'orthophosphate inorganique par minute dans une solution contenant 0,0051 mol/l de phytate de sodium à pH 5,5 et à une température de 37 °C ;
ii) des fibres végétales broyées présentant un diamètre maximal des particules de 250 µm,
iii) de l'acide citrique en une concentration comprise entre 5 % et 35 % en poids par rapport au poids total du mélange solide en tant qu'agent chélatant et
une source de phosphore choisie parmi le phosphate monocalcique, le phosphate dicalcique ou une combinaison des deux sous la forme d'une poudre défluorée.

6. Additif alimentaire pour fourrage selon la revendication 1, **caractérisé en ce que** la quantité de fibres végétales broyées présentes dans l'additif est comprise entre 3 et 5 % en poids par rapport au poids total du mélange liquide.

7. Additif alimentaire pour fourrage selon la revendication 5, **caractérisé en ce que** la quantité de fibres végétales broyées présentes dans l'additif selon l'invention est comprise entre 2 et 25 % par rapport au poids total du mélange solide.

8. Additif alimentaire pour fourrage selon les revendications 1 ou 5, **caractérisé en ce que** des fibres végétales provenant d'orge, de maïs, de blé ou de soja, du son de blé ou du son de riz sont utilisés en tant que fibres végétales.

9. Additif alimentaire pour fourrage selon la revendication 8, **caractérisé en ce que** les fibres végétales sont du son de blé ou de riz.

10. Utilisation de l'additif selon l'une quelconque des revendications précédentes pour la production d'un fourrage pour animaux, dans laquelle l'additif est appliqué au fourrage en une proportion comprise entre 100 g et 10 kg par tonne de fourrage.
